# EUROPÄISCHE PATENTSCHRIFT

(11) **EP 1 248 069 B1**
(45) Veröffentlichungstag und Bekanntmachung des Hinweises auf die Patenterteilung: **19.07.2006**
(21) Anmeldenummer: 02005704.8
(22) Anmeldetag: 13.03.2002
(51) Int. Cl.: G01B 7/00, G01C 19/66

(54) **Verfahren zur Bestimmung der räumlichen Orientierung eines Körpers relativ zu einer Bezugsrichtung**
Method of determining spatial orientation of a body relatively to a reference direction
Procédé pour déterminer l'orientation spatiale d'un corps relativement à une direction de référence

(30) Priorität: 28.03.2001 DE 10115548
(43) Veröffentlichungstag der Anmeldung: 09.10.2002
(73) Patentinhaber: Prüftechnik Dieter Busch AG, 85737 Ismaning (DE)
(72) Erfinder: Hermann, Michael, 78052 Villingen-Schwenningen (DE)

(56) Entgegenhaltungen:
- EP-A- 0 822 391
- DE-A- 3 109 718
- DE-A- 19 947 292
- DE-C- 4 231 935
- US-A- 4 179 818
- US-A- 4 477 188
- US-A- 4 825 716
- US-A- 4 886 364

## Beschreibung

Die Erfindung betrifft ein Verfahren zur Bestimmung der räumlichen Orientierung eines Körpers relativ zu einer Bezugsrichtung. Anstelle eines Körpers kann mit dem Verfahren auch lediglich die relative Winkellage einer Kante des Körpers relativ zu einer Bezugsrichtung gemessen werden. In gleicher Weise kann mit dem Verfahren zum Beispiel auch eine Symmetrieachse eines Körpers vermessen werden, wie zum Beispiel die Ausrichtung einer Satellitenantenne (Bodenstation) relativ zu geographischen Koordinaten. Dabei kann der Körper fest oder beweglich sein und z.B. durch ein Fahrzeug oder eine Maschine repräsentiert werden, oder durch einen menschlichen oder tierischen Körper bzw. Teile von diesem.

Zum Zwecke der Bestimmung der räumlichen Orientierung eines Körpers relativ zu einer Bezugsrichtung, und absolut innerhalb eines Inertialsystems, ist es seit einiger Zeit bekannt, genaue Kreiselsysteme zu verwenden. Neben mechanischen Kreiseln, deren Präzision durch mechanische Randbedingungen limitiert wird, sind seit kurzer Zeit Kreisel auf optischer Basis, insbesondere in der Ausführungsform mit einem sog. Ringlaser, als hochgenaue Richtungs-und Orientierungs-Meßgeräte auf dem Markt. Eine solche Einrichtung ist aus der Patentschrift US 6195615 bekannt. Leider sind die Kosten für besonders genaue Instrumente dieser Art von erheblichem Umfang, so daß es von signifikanter Bedeutung ist, die Kosten/Nutzen-Relation solcher Meßgeräte deutlich zu verbessern.
Ein redundantes Inertialkreiselsystem mit vier auf einem gleichseitigen Tetraeder aufgebrachten Sensor-Gyroskopen ist aus der US-A-4 179 818 bekannt.
Die genannte Aufgabenstellung ist der präsentierten Erfindung zugrundegelegt. Diese Aufgabe ist durch die im Kennzeichen des unabhängigen Patentanspruchs 1 angegeben Merkmale gelöst. Dem abhängigen Patentanspruch 2 entnimmt man eine vorteilhafte Ansführungs form. Die Erfindung löst das anstehende Problem dadurch, daß eine redundante Auslegung eines mit Kreiseln ausgestatteten inertialen Richtungsmeßsystems dessen funktionale Eigenschaften nicht nur hinsichtlich Betriebssicherheit, sondern insbesondere auch hinsichtlich Genauigkeit verbessert. Gleichzeitig werden bei Verwendung weniger genauer und kostengünstiger einzelner

Kreiselsysteme die Gestehungskosten gesenkt. Mit anderen Worten: Die Erfindung sieht vor, anstelle eines Kreiselsystems bestehend aus drei orthogonal zueinander ausgerichteten Einzel-Kreiseln, von denen jeder mit ca. Euro 20.000.-- zu veranschlagen ist, nunmehr ein solches System vorzusehen, welches aus z.B. acht symmetrisch um eine Achse oder um ein Zentrum angeordneten Einzelkreiseln besteht, welche nur jeweils ca. Euro 5.000.-- kosten. Gemäß der Erfindung werden typischerweise alle Kombinationen von 3 aus 8 Kreiseln zu einer individuellen Kreisel-Triade herangezogen, um eine Mehrzahl von unabhängigen Richtungsmessungen mit derartig gebildeten Kreisel-Triaden durchzuführen. Da bei dem genannten Beispiel von 3 aus 8 Kreiseln also insgesamt 56 einzeln auswertbare Meß-Systeme zur Erkennung einer winkelmässigen Orientierung im Raum darstellbar sind, kann die Genauigkeit des gewünschten Meßergebnisses hinsichtlich Drift und weiterer Fehler durch Mittelwertbildung und weitere statistische Betrachtungen signifikant gesteigert werden. Gleichzeitig können sich die genannten Meßsysteme, bestehend aus je drei einzelnen Kreiseln, gegenseitig überprüfen, so daß Einzel-Kreisel mit verschlechterten Meß-Eigenschaften gemäß der Erfindung bereits während des regulären Betriebes identifiziert und gegebenenfalls stillgelegt werden können. Wie erwähnt, liegt gleichzeitig eine gewisse Redundanz vor, so daß ein Meßsystem der vorgeschlagenen Art bei Ausfall eines einzelnen Kreisels trotzdem weiterhin benutzbar ist, wenn auch bei reduzierter Genauigkeit. Es wird also ein Meßgerät zur Bestimmung der räumlichen Orientierung eines Körpers relativ zu einer Bezugsrichtung geschaffen, welches ein Gehäuse zum Anlegen an eine Oberfläche oder an eine Kante eines zu vermessenden Körpers aufweist, welches mit einer Mehrzahl von Kreiselsystemen zur Ermittlung der anteiligen Drehbewegung um eine jeweils diesen zugeordnete Symmetrieachse versehen ist, und welches sich dadurch auszeichnet, daß mindestens vier, bevorzugt weitere, Einzelkreisel innerhalb des Gehäuses vorhanden sind, die in jeweils unterschiedliche Raumrichtungen orientiert oder ausgerichtet sind, und wobei alle Kombinationen aus jeweils drei zu einer sog. Kreiseltriade zusammenfaßbarer Einzelkreisel ein jeweils erstes Meßergebnis liefern, welches die räumliche winkelmäßige Orientierung des Meßgerätes oder eines mit diesem kontaktierten Körpers ausweist. Diese erfindungsgemäße Anordnung wird so benutzt, daß zunächst eine Vielzahl an ersten Meßergebnissen bereitgestellt wird, und sodann aus der Vielzahl der ersten Meßergebnisse zusätzlich ein Gesamt-Meßergebnis ermittelt wird, welches (im Vergleich zu den einzelnen ersten Meßergebnissen) eine signifikant genauere winkelmäßige Orientierung des Meßgerätes oder eines mit diesem kontaktierten Körpers ausweist.

Die Anzahl von acht Kreisel-Einzelsystemen innerhalb eines Gesamtsystems gemäß der Erfindung ist nicht zwingend. Es können auch z.B. vier, fünf, sechs usw. Kreisel oder eine wesentlich größere Anzahl verwendet werden. Die gewählte Zahl der Einzel-Kreisel sollte jedoch zu einem Kompromiß hinsichtlich apparativem Aufwand und erzielbarer Genauigkeitssteigerung führen. Ein solcher Kompromiß hängt ersichtlich auch davon ab, welcher Kostenanteil für eine erforderliche zusätzliche Recheneinheit zu veranschlagen ist.

Gemäß der Erfindung ist es wie erwähnt möglich, die vorgesehenen Einzelsysteme symmetrisch um eine einzelne Vorzugsachse zu gruppieren. Es ist ebenfalls möglich, die Orientierung der Einzelsysteme nach Symmetrierichtungen eines regulären Polyeders, oder aber annähernd statistisch über den Raumwinkel (4 * Pi) zu verteilen. Es sollte aber gewährleistet sein, daß die einzelnen Orientierungen hinsichtlich eines gerätefesten Koordinatensystemes genügend genau einstellbar bzw. meßbar sind. Weiterhin ist es wichtig, daß die Richtungs-Vektoren von jeweils drei Einzelkreiseln nicht koplanar sind. Gemäß der Erfindung werden die Meßwerte, die von den Einzelkreiseln typischerweise in einem schiefwinkligen dreidimensionalen Koordinatensystem ermittelt werden, auf ein rechtwinkliges kartesisches Koordinatensystem umgerechnet. Auf diese Weise können ausgegebene Meßwerte z.B. in Eulerschen Winkeln (Stampf-, Gier- und Rollwinkel bzw. Pitch, Yaw und Roll) bezüglich eines solchen rechtwinkligen Koordinatensystems ausgedrückt werden. Diese Umrechnung wird, genauso wie die statistischen Berechnungen, durch den in einem umschließenden Gehäuse des Meßgerätes vorgesehenen Computer vorgenommen.

Diese und weitere Einzelheiten der Erfindung werden anhand der Zeichnung erläutert. Es zeigt:
- Fig. 1: eine axial-symmetrische Anordnung von 7 Einzelkreiseln relativ zu einem x-y-z - Koordinatensystem
- Fig. 2: eine schematische Darstellung einer Systemkonfiguration mit 7 Einzelkreiseln

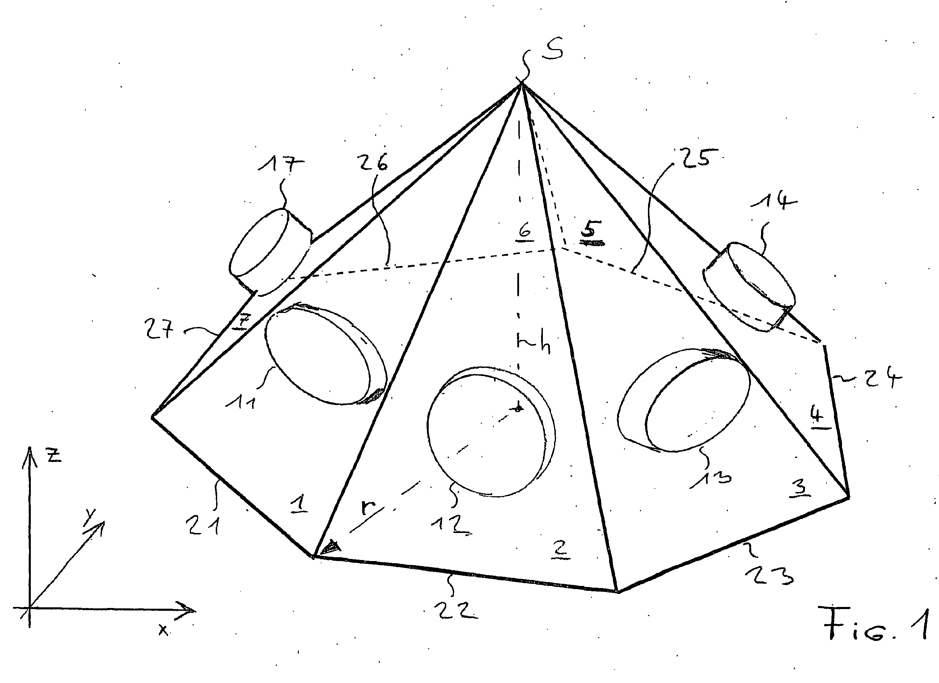

Wie aus Fig. 1 ersichtlich, werden definierte Richtungen im Raum bezüglich eines gerätefest vorgegebenen x-y-z- Koordinatensystems durch eine Pyramide definiert. Deren Seitenflächen 1, 2, 3, 4, 5, 6 und 7 besitzen Grundkanten 21, 22, 23, 24, 25, 26 und 27, welche die Grundfläche der Pyramide begrenzen. Die einzelnen Seitenflächen unterscheiden sich also eindeutig in ihren Richtungs-Cosinus-Werten. Wird auf eine einzelne Seitenfläche (Bezugsziffer bis 7) jeweils ein einzelener optischer Kreisel angebracht (Bezugsziffern 11, 12, 13, 14, 17; die restlichen vier Einzelkreisel sind aus Gründen der Übersichtlichkeit nicht gezeigt) , so daß jeweils eine optische Ring-Ebene parallel zur betreffenden Seitenfläche liegt, können die Richtungs-Cosinus-Werte der einzlnen Kreisel relativ zum gezeigten x-y-z-Koordinatensystem genau angegeben werden. Durch je drei beliebig gewählte Kreisel (Triaden) kann somit auch eine Drehbewegung des gerätefesten Koordinatensystems im Raum ausgemessen und nach Umrechnung als Pitch-, Yaw- und Rollwerte dargestellt werden. Allerdings ist die zu erwartende Genauigkeit der einzelnen Triaden aus Fig. 1 nicht gleichwertig, vielmehr sind gewisse Kombinationen durch höhere Genauigkeit ausgezeichnet als z.B. eine Triade von direkt benachbarten Kreiseln 11, 12, 13.

Da in der abgebildeten Konfiguration insgesamt 35 voneinander unabhängige Kreisel-Triaden angegeben werden können, kann die Beobachtung der genannten Drehbewegung, mithin auch die Vermessung der Relativlage eines Körpers bezüglich einer Referenzrichtung, sich auf 35 Einzelmessungen beziehen. Im Idealfalle würden alle Einzelmessungen ein gleiches Ergebnis liefern. Die einzelnen Konfigurationen arbeiten jedoch, wie bereits dargestellt, mit unterschiedlicher Genauigkeit. Die Einzelmessungen werden daher bevorzugt so zu einem Gesamtwert zusammengefaßt, daß die genauer arbeitenden Kreiseltriaden mit einem höheren Gewicht bei einer durchzuführenden Mittelwertbildung versehen werden. Solche genauer funktionierende Kreiseltriaden sind also solche, deren Abstände nicht kleiner als 2 Positionen sind. Am wenigsten genau messen diejenigen Kreiseltriaden, welche direkt beabstandet sind und keine Zwischenräume aufweisen.

Zur Erzielung eines möglichst guten Meßergebnisses sollte in der gezeigten Anordnung das Verhältnis der Höhe h zum Radius r eines zugrundegelegten Pyramidenkörpers etwa einen Wert von 0,2 bis 1,2 aufweisen. Ein bevorzugter Wert liegt bei 0,55 - Bei einem ca. zweifachen Materialeinsatz im Vergleich zu einer herkömmlichen orthogonalen Kreiseltriade kann also gemäß der Erfindung ein ca. 3-4 fach genaueres Ergebnis erhalten werden. Hierin besteht der Sinn und der wesentliche Vorteil der Erfindung. Ein zusätzlicher Vorteil der Erfindung besteht darin, daß Meßgeräte der gattungsgemäßen Art, wie sie zum Vermessen von Rollen in Papier- und Walzwerken verwendet werden, ohnehin von eher langgestreckter Gestalt sind und daher Platz für mehr als drei einzelne Kreiselsysteme bieten.

In einer bevorzugten, nicht gezeigten Ausgestaltung der Erfindung liegen z.B. acht Einzelkreisel auf den Flächen eines regelmäßigen Oktaeders. Bei einer solchen Anordnung sind die Richtungsunterschiede zwischen den einzelnen Kreisen im Mittel größer als in der in Fig. 1 gezeigten Anordnung. Darüberhinaus gibt es keine unterschiedlich zu bewertenden Kombinationen, so daß eine solche Anordnung noch effizienter arbeitet, d.h. bei nur ca. 15% gesteigertem Materialaufwand erneut ein mehrfach verbessertes Meßergebnis liefert.

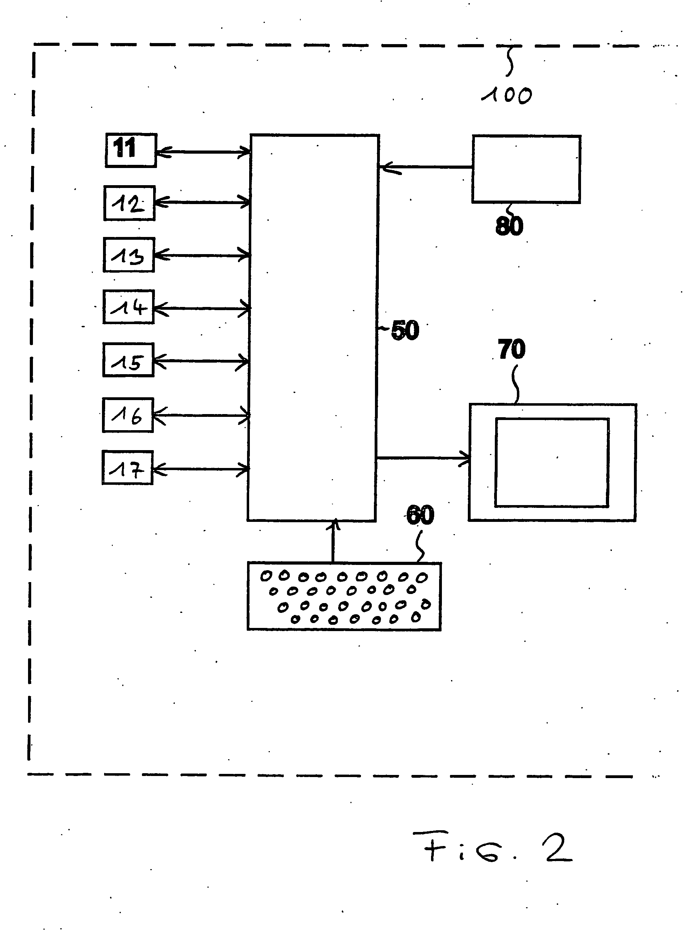

In der Schemazeichnung gemäß Fig. 2 wird dargestellt, wie ein erfindungsgemäßes Gesamtsystem sich zusammensetzt aus einem Gehäuse 100, einzeln in diesem Gehäuse angeordneten Kreiseln 11 bis inkl.. 17, einem Rechner 50 zur Abfrage der Kreisel und zur Ermittlung eines Ergebnisses in Form eines Orientierungswertes, welches auf einem Sichtschirm 70 dargestellt werden kann. Die Bedienung des Gesamtsystems erfolgt bevorzugt mittels einer Tastatur 60, wiewohl andere Eingabemittel (Maus, Trackball, Stift, Sprache usw.) vorgesehen werden können. Das Gesamtsystem wird bevorzugt von einer Batterie oder Akkumulator 80 bestromt, bei Bedarf kann auch ein Netzanschluß vorgesehen sein.

## Patentansprüche

1. Verfahren zur Bestimmung der räumlichen Orientierung eines Körpers relativ zu einer Bezugsrichtung mittels eines Kreiselsystems welches aus einer Anzahl von mindestens vier Einzelkreiseln besteht, **gekennzeichnet durch** folgende Verfahrensschritte:
- Bestimmung sämtlicher Kombinationen von jeweils drei nicht-koplanar ausgerichteten Einzelkreiseln aus der genannten Anzahl von Kreiseln, so daß jede dieser Kombinationen eine Kreiseltriade bildet
- Bereitstellung des Meßergebnisses von jeder der genannten Kreiseltriaden für die räumliche Orientierung des Körpers , so daß ein erster Satz von Meßergebnissen gebildet wird
- Darstellung eines Gesamtmeßergebnisses **durch** Zusammenfassung und Mittelwertbildung unter Verwendung des genannten ersten Satzes von Meßergebnissen.

2. Verfahren nach Anspruch 1, **dadurch gekennzeichnet, daß** die Meßergebnisse aus dem ersten Satz von Meßergebnissen jeweils mit einem Gewicht versehen werden und eine gewichtete Mittelwertbildung zur Darstellung des Gesamtmeßergebnisses, unter Verwendung der entsprechenden Gewichte, durchgeführt wird.

## Claims

1. Method for determining the spatial orientation of a body relative to a reference direction by means of a gyroscope system which comprises a number of at least four individual gyroscopes, **characterized by** the following method steps:
- determining all the combinations of respectively three individual non-coplanarly aligned gyroscopes from the aforementioned number of gyroscopes, so that each of these combinations forms a gyroscope triad,
- providing the measured result from each of the aforementioned gyroscope triads for the spatial orientation of the body, so that a first set of measured results is formed,
- representing an overall measured result by combining and averaging by using the aforementioned first set of measured results.

2. Method according to Claim 1, **characterized in that** the measured results from the first set of measured results are each provided with a weight and weighted averaging is carried out by using the appropriate weights in order to represent the overall measured result.

## Revendications

1. Procédé de détermination de l'orientation spatiale d'un corps par rapport à une direction de référence au moyen d'un système gyroscopique qui est constitué d'un nombre d'au moins 4 gyroscopes individuels, **caractérisé par** les étapes de procédé suivantes :
- détermination de toutes les combinaisons de à chaque fois trois gyroscopes individuels orientés de façon non coplanaire à partir du nombre cité de gyroscopes de sorte que chacune de ces combinaisons forme une triade de gyroscopes
- préparation du résultat de mesure à partir de chacune des triades de gyroscopes citées pour l'orientation spatiale du corps de sorte qu'un premier jeu de résultats de mesure est constitué
- présentation d'un résultat de mesure global par réunion et établissement de la moyenne en utilisant le premier jeu cité de résultats de mesure.

2. Procédé selon la revendication 1, **caractérisé en ce que** chaque résultat de mesure provenant du premier jeu de résultats de mesure est pourvu d'un poids et **en ce qu'**une valeur moyenne pondérée est établie afin de présenter le résultat de mesure global en utilisant les poids correspondants.
